# EUROPEAN PATENT SPECIFICATION

(11) **EP 0 729 906 B1**
(45) Date of publication and mention of the grant of the patent: **28.06.2000**
(21) Application number: 95105117.6
(22) Date of filing: 05.04.1995
(51) Int. Cl.: B65G 47/14

(54) **Article supply apparatus**
Zuführgerät für Gegenstände
Appareil d'alimentation d'articles

(30) Priority: 01.03.1995 JP 4185595
(43) Date of publication of application: 04.09.1996
(73) Proprietor: SEIKO CORPORATION, Shimizu 424-0809 (JP)
(72) Inventor: Hayashi, Ryuuzou, Mishima 411 (JP); Tuchiya, Hideo, Mishima, 411 (JP); Gotou, Takayuki, Numazu, 410 (JP); Murasaki, Makoto, Tagatgun, Shizuoka 410-24 (JP)
(74) Representative: Marx, Lothar, Dr.

(56) References cited:
- EP-A- 0 462 911
- EP-A- 0 474 142
- DE-C- 129 311
- FR-A- 2 539 721
- US-A- 2 853 176

## Description

The present invention relates to an article supply apparatus capable of taking out articles being supplied at random one by one and supplying them to the next process.

### Description of the Related Art

Conventionally, there is known an apparatus for accommodating a number of articles in a hopper at random, taking out the articles from the hopper one by one and supplying them to the next process from, for example, the supply apparatus disclosed in Japanese Patent Application Laid-Open No. 1(1989)-51403.

The supply apparatus is formed to an annular shape of a portion of a hemisphere not containing the center of a sphere and uses a drop preventing wall the diameter of the upper opening of which is set to the diameter of the sphere, and a moving disk and the drop preventing wall are arranged such that the rotary shaft of the moving disk passing through the center of the moving disk and perpendicular to the moving disk passes through the center of the sphere.

In the above supply apparatus, however, both the moving disk for moving articles from a lower side to an upper side and the drop preventing wall for preventing the drop of the articles from the disk rotate, it is difficult for the articles to be smoothly transferred onto an obliquely moving ring disposed on the upper edge of the drop preventing wall. In particular, unless the articles are transferred quickly, they are liable to stay at the position where they are to be transferred, and when a feed conveyer is driven faster to solve this problem, a disadvantage occurs in that the feed rate of the feed conveyer is not synchronized with the processing rate of the next process to cause the stay of the articles.

In particular, since the transfer of the articles from the moving disk to the obliquely moving ring and further the supply of the articles to the next process must carried out via the transfer of the articles through the feed conveyer, the apparatus is made complex as well as the attitude of the articles may be changed each time the articles are transferred, which adversely affects the following processes.

From EP-A-0 474 142 a centrifugal sorter with a ring which rotates around a sorter bowl as a guide for articles is known. Disadvantageously the provision of such a rotating ring raises the production costs of the sorter. Since the articles from the sorter bowl are at first supplied to said rotating ring, provisions must be made such as guiding walls to prevent to the articles from falling of the rotating ring. Said ring is provided to make sure that a broad section of the feed disk in the area were the articles leave said feed disk is covered, so that articles of different weight, which may leave the feed disk in different radial directions, may securely land on the rotating ring. This construction, however, is complicated and costly.

It is the object of the present invention to provide an article supply apparatus which overcomes the above-mentioned disadvantages of the prior art. In particular, it is the purpose of the present invention to provide an article supply apparatus which can easily be arranged in such a way that it is certain that even articles of different weight arrive at the conveyer which transports the articles after they leave the feet disk. This object is attained by an article supply apparatus according to claim 1.

A preferred embodiment is defined by claim 2.

The transfer means is a conveyer having flexibility in the radial direction of the feed disk and disposed around the outside periphery of the feed disk in front of and behind the apex of the feed disk with the apex held therebetween.

Further, the transfer means may be a linear conveyer confronting the outer periphery of the feed disk in front of and behind the apex of the feed disk with the apex held therebetween.

The transfer means can be an annular member turning around the outside periphery of the guide member and being formed to be inclined downward as it advances in an external end direction.

The present invention arranged as described above achieves the following functions.

When a number of articles are put onto the feed disk at random, the articles are placed on the feed disk as well as the articles positioned around the outside periphery of the feed disk are always positioned on the feed disk by being guarded by the guide member.

When the feed disk and the transfer means are driven in this state, respectively, the articles positioned at the lower side of the feed disk are gradually risen and butted against the wall of the guide member by receiving a centrifugal force as the feed disk mounted at the predetermined angle rotates and reaches the rising end of the feed disk.

Then, the articles released from the regulation by the guide member are moved outwardly of the guide member and transferred to the transfer means disposed outwardly of the guide member in confrontation with the apex of the guide member and fed to the terminal end of the transfer means.

When the conveyer having flexibility in the radial direction of the feed disk is used as the transfer means, the conveyer can be disposed at any desired position with respect to the feed disk while being caused to get fit to the outside shape of the feed disk.

When the annular member turning around the outside periphery of the guide member is used as the transfer means, the inclining direction of the feed disk can be set at any desired position.

When the annular member is gradually inclined as it advances in its outside end direction, the articles can be securely transferred onto the annular member because the articles are liable to be moved along the inclination of the annular member when they are transferred from the feed disk onto it.

### BRIEF DESCRIPTION OF THE DRAWINGS

FIG. 1 is a front elevational view in longitudinal cross section schematically showing an embodiment of an article supply apparatus of the present invention,
FIG. 2 is a schematic plan view of the apparatus of FIG. 1;
FIG. 3 is a front elevational view in longitudinal cross section schematically showing another example of transfer means of the apparatus of FIG. 1; and
FIG. 4 is a plan view schematically showing a further example of the transfer means of the apparatus of FIG. 1.

### DESCRIPTION OF PREFERRED EMBODIMENTS

An embodiment of an article supply apparatus of the present invention will be described below with reference to the drawings.

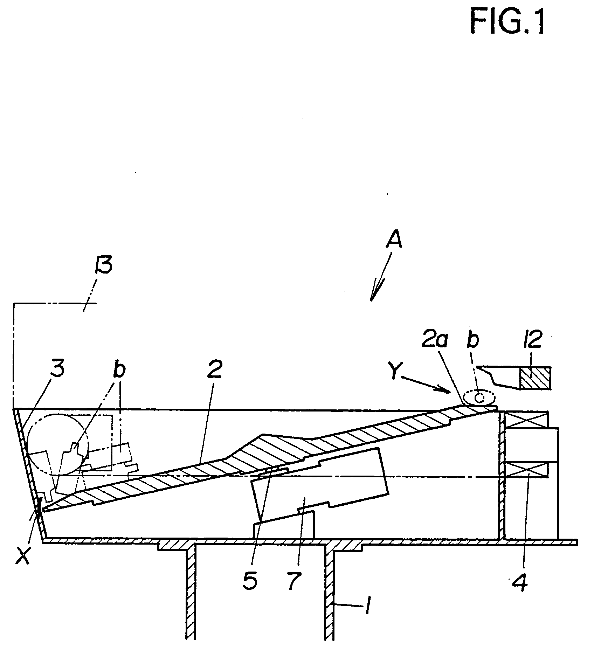

In FIGS. 1 - 4, denoted at A is an article supply apparatus for, for example, continuously supplying one by one articles b such as containers and the like to be filled with a fluid and package the same. The article supply apparatus is fundamentally composed of a machine body 1, a feed disk 2, a guide member 3 and a transfer means 4.

The feed disk 2 is formed to a flat disk shape having an article placing surface 2a thereon to place the articles b and rotatably supported by an inclined support shaft 5 while being inclined toward the machine body 1 at a predetermined angle so that the feed disk 2 continuously feeds the articles b placed on the placing surface 2a from the lower X side of the feed disk 2 to the apex Y side thereof.

Note, the feed disk 2 has an inclined surface 2a inclined at a predetermined angle and formed around the outside periphery thereof to make the inclined surface 2a substantially flush with the surface of the transfer means 4 to be described later on the upper portion of the feed disk 2 so that the articles b can be easily transferred onto the transfer means 4 from the feed disk 2.

Further, a number of moving up members 6 each having a predetermined amount of projection are intermittently disposed on the feed disk 2 to prevent the movement of the articles b from the apex Y side to the lower X side.

The feed disk 2 is rotated by a motor 7 with a speed reducer coupled with the inclined support shaft 5 at a predetermined r.p.m or at a variable speed.

The aforesaid guide member 3 is provided with the machine body 1 in such a manner that it is positioned around the outside periphery of the feed disk 2 from the lower X side to the apex Y side of the feed disk 2 while being spaced apart from the feed disk 2 by an interval at least narrower than the outside dimension of the articles b (it is preferable for a minimum interval to prevent the interference of the guide member 3 with the feed disk 2) or in sliding contact with the feed disk 2 and formed to have a circular lateral cross section. A space for accommodating the articles b are formed by the guide member 3 and the feed disk 2.

Although the guide member 3 is fixed to the machined body 1, it may be arranged to rotate around the outside periphery of the feed disk 2 as necessary. Thus, the guide member 3 is rotated in association with the motor 5 of the feed disk 2 or rotated by a separate drive member (not shown) in synchronism with the feed disk 2 or at a different speed. When the r.p.m. of the feed disk 2 is set equal to that of the guide member 3, scratches of the articles b caused when they are in sliding contact with the feed disk 2 and the guide member 3 can be greatly reduced.

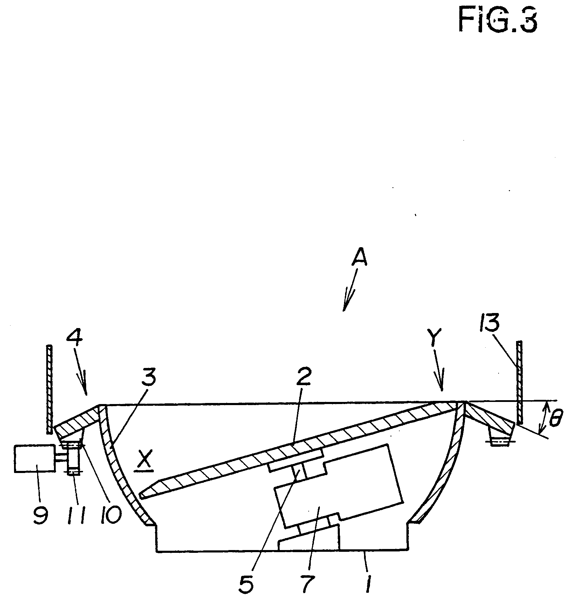

The wall of the guide member 3 may be formed to an outwardly inclining flat shape as shown in FIG. 1, to a vertical shape although not shown, further to a hemispherical shape as shown in FIG. 3 or to an inverted conical shape although not shown.

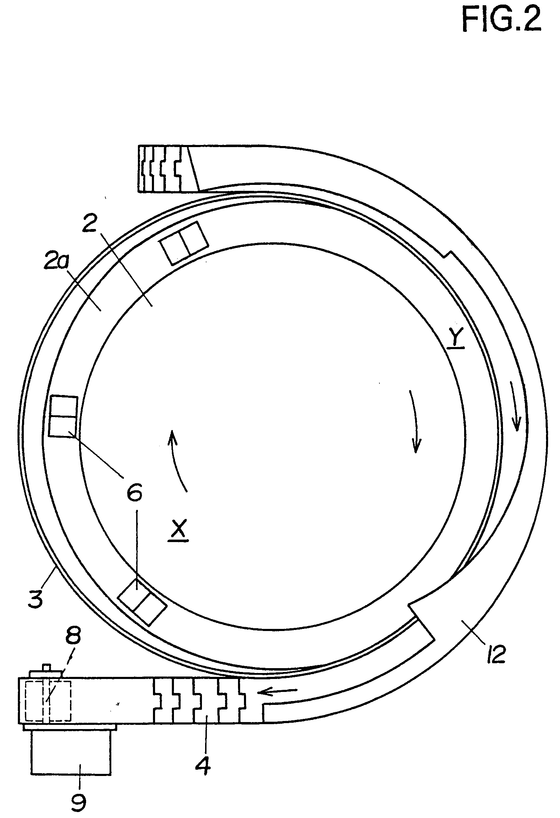

The aforesaid transfer means 4 is disposed outwardly of the feed disk 2 with at least a portion thereof confronting the apex Y of the feed disk 2 to receive the articles b on the feed disk 2 and transfer them to the outside portion of the guide member 3. In the case shown in FIGS. 1 and 2, a conveyer (curved chain conveyer) is used which is supported by a shaft in an endless state around the feed disk 2 and has flexibility inwardly or outwardly of the radial direction of the feed disk 2.

The conveyer is continuously driven in a given direction by drive means 9 such as a motor with a speed reducer or the like associated with a support shaft 8 on the one hand.

In particular, since the transfer means 4 need only be disposed in front of and behind the apex Y of the feed disk 2 with the apex Y held therebetween, the transfer means 4 can be connected to any arbitrary receiving portion of a processor in the next process at the position thereof.

When the transfer means 4 is arranged to be in confrontation with the feed disk 2 only at a position where the articles b are delivered to the transfer means 4 from the apex Y of the feed disk 2, the apparatus can be made compact as a whole and further a drive system can be easily associated therewith.

The transfer means 4 is formed to an arc shape in FIG. 2 so that it gets fit to the outside shape of the feed disk 2. Fixed tables 3a, 3b and the like are disposed in the spaces produced in front of and behind the apex Y of the feed disk 2 between the guide member 3 and the feed disk 2 to prevent the drop of the articles b when they are transferred.

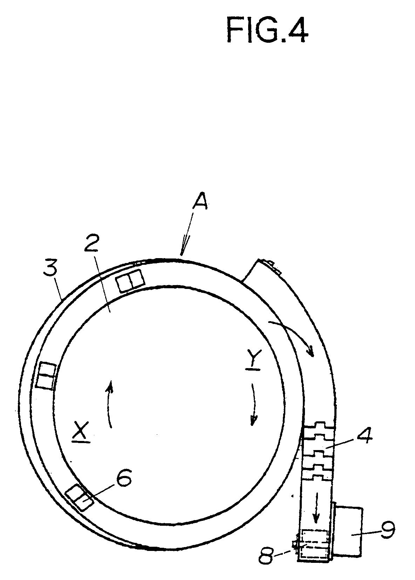

As shown in FIG. 4, the transfer means 4 is disposed to have an arc shape at the apex Y of the feed disk 2 so that the front and back sides of the transfer means 4 get fit around the outside shape of the feed disk 2 and the portion of the transfer means 4 apart from the apex Y is formed to a linear shape or a line directed in an arbitrary direction so that the line is suitably connected to the next process.

Note, although not shown, the transfer means 4 using the conveyer having flexibility in a radial direction may be disposed around the entire periphery of the outside portion of the guide member 3. In this case, the final taking out portion of the next process may confront the outside of the apparatus A or a conveyer for taking out the articles b may be connected to the transfer means 4.

Although the transfer means 4 composed of the flexible conveyer is preferably disposed around the outside periphery of the feed disk 2, it is not necessary for the transfer means 4 to be disposed along a curvature equal to the radius of the guide member 3 (feed disk 2) and the transfer means 4 may be disposed around the feed disk 2 in the state that the conveyer has a larger curvature or the conveyer may be flexible in the direction opposite to the radial direction of the feed disk 2.

As shown in FIG. 3, the transfer means 4 may also employ an annular member turning around the outside periphery of the guide member 3. In this case, a pinion gear 11 engaged with a ring gear 10 disposed at a proper position is turned by a drive member 9 such as a motor with a speed reducer or the like in a given direction at a predetermined speed.

Note, when the transfer means 4 composed of the annular member 4 is inclined downward at a predetermined angle θ as it advances in an external end direction as shown in FIG. 3, even if the articles b which have not been perfectly transferred from the feed disk 2 onto the transfer means 4 are moved along the inclination by their dead load so that the articles can be smoothly transferred and the jam of the articles b can be prevented at the taking-out port of a transfer end portion.

In FIGS. 1 and 2, numeral 12 denotes an article regulating member disposed above the transfer means 2 in confrontation therewith for regulating the articles b. The regulating member 12 is used for the purpose that when the transferred articles b take an irregular attitude such as they stand up or are overlapped each other, the articles b are dropped again onto the feed disk 2 while being abutted against the regulating member 12 as the feed disk 2 rotates and the transfer means 4 moves. It is needless to say that even the apparatuses A shown in FIGS. 3 and 4 are provided with the regulating member 12 likewise.

Note, in FIGS. 1 and 3, numeral 13 denotes a cover member disposed above the guide member 2 to prevent the jumping out of the articles b being taken out.

The present invention can achieve particular advantages as described below. That is, since the present invention arranged as described above can transfer articles onto the transfer means by rotating only the feed disk, it has a simple constitution and enables the smooth transfer of the articles.

Since no adverse effect is applied to the feed of the articles effected by the feed disk even if the transfer rate of the transfer means is changed, the transfer rate of the transfer means can be optimally set corresponding to the processing speed of the next process.

In particular, when the flexible transfer means is used, since the transfer means can be directly connected to the conveyer of the next process to supply articles to the next process, the apparatus can be simplified and the cost for making it can be lowered, and since the attitude of the articles is not changed each time they are transferred, no adverse effect is applied to the following processings.

Further, the transfer means composed of the annular member can optionally set an article delivery position from the feed disk and is inclined downward, articles having been insufficiently transferred can be securely moved onto the transfer means from the feed disk.

## Claims

1. An article supply apparatus, characterized by comprising:
a machine body (1);
a feed disk (2) rotatably supported by said machine body (1) while being inclined at a predetermined angle for transferring articles (b) placed on the upper portion thereof from the lower side thereof to the apex side thereof;
a guide member (3) with a circular cross section provided with said machine body (1) and disposed around the outside periphery of said feed disk (2) from the lower side of said feed disk (2) to the apex side thereof while being spaced apart from said feed disk (2) by an interval at least narrower than the outside dimension of articles (b); and
transfer means (4) disposed outwardly of said feed disk (2) with at least a portion thereof in confrontation with the apex of said feed disk (2) for receiving the articles (b) on said feed disk (2) and transferring the articles (b) to the outside of said guide member (3);
characterized in that said transfer means (4) is a conveyor having flexibility in the radial direction of said feed disk (2) and disposed around the outer periphery of said feed disk (2) in front of and behind the apex of said feed disk (2).

2. An article supply apparatus according to claim 1, wherein said transfer means (4) as said annular member is formed to be inclined downward as said transfer means (4) advances in an outside end direction.

## Patentansprüche

1. Zuführgerät für Gegenstände, dadurch gekennzeichnet, dass es aufweist:
einen Maschinenkörper (1);
eine Zuführscheibe (2), die drehbar durch den Maschinenkörper (1) gehalten wird, während sie in einem vorbestimmten Winkel geneigt ist, um Gegenstände (b), die an ihrem oberen Abschnitt angeordnet sind, von ihrer unteren Seite zu ihrem Scheitel zu transportieren;
ein Führungsbauteil (3) mit einem kreisförmigen Querschnitt, das mit dem Maschinenkörper (1) vorgesehen und um den äußeren Umfang der Zuführscheibe (2) von der unteren Seite der Zuführscheibe (2) zu ihrer Scheitelseite hin vorgesehen ist, während es von der Zuführscheibe (2) durch einen Abstand beabstandet ist, der zumindest schmaler ist als der Außendurchmesser der Gegenstände (b); und
eine Transporteinrichtung, die außerhalb der Zuführscheibe (2) angeordnet ist, mit mindestens einem Abschnitt davon in Anlage an bzw. gegenüberstehend dem Scheitel der Zuführscheibe (2) zur Aufnahme der Artikel (b) auf der Zuführscheibe (2) und zum Transportieren der Artikel (b) zur Außenseite des Führungsbauteils (3);
dadurch gekennzeichnet, dass die Transporteinrichtung (4) ein Förderer ist, der eine Flexibilität in Radialrichtung der Zuführscheibe (2) aufweist und um den äußeren Umfang der Zuführscheibe (2) vor und hinter dem Scheitel der Zuführscheibe (2) angeordnet ist.

2. Zuführgerät für Gegenstände nach Anspruch 1, bei dem die Transporteinrichtung (4) als ringförmiges Bauteil so ausgebildet ist, dass sie im Verlauf der Transporteinrichtung (4) zu einer äußeren Endrichtung hin nach unten geneigt ist.

## Revendications

1. Dispositif d'alimentation en articles, caractérisé en ce qu'il comprend:
un corps (1) de machine;
un disque d'alimentation (2) supporté de manière rotative par ledit corps (1) de machine en étant incliné suivant un angle prédéterminé pour transférer des articles (b) placés sur sa partie supérieure de sa base à son sommet;
un élément de guidage (3) à section transversale circulaire d'une seule pièce avec ledit corps (1) de machine et disposé sur le pourtour extérieur dudit disque d'alimentation (2), de la base dudit disque d'alimentation (2) jusqu'à son sommet en étant espacé dudit disque d'alimentation (2) par un intervalle au moins plus étroit que la dimension extérieure des articles (b); et
un moyen de transfert (4) disposé à l'extérieur dudit disque d'alimentation (2), au moins une partie de celui-ci étant en regard du sommet dudit disque d'alimentation (2) pour recevoir les articles (b) sur ledit disque d'alimentation (2) et transférer les articles (b) à l'extérieur dudit élément de guidage (3);
caractérisé en ce que ledit moyen de transfert (4) est un convoyeur présentant de la souplesse dans la direction radiale dudit disque d'alimentation (2) et disposé sur le pourtour extérieur dudit disque d'alimentation (2) en face et en arrière du sommet dudit disque d'alimentation (2).

2. Dispositif d'alimentation en articles selon la revendication 1, dans lequel ledit moyen de transfert (4) constituant ledit élément annulaire est formé de manière à être incliné vers le bas à mesure que ledit moyen de transfert (4) s'avance en direction de l'extrémité extérieure.
